# FASCICULE DE BREVET EUROPEEN

(11) **EP 3 558 886 B1**
(45) Date de publication et mention de la délivrance du brevet: **05.07.2023**
(21) Numéro de dépôt: 17832288.9
(22) Date de dépôt: 22.12.2017
(51) Int. Cl.: F24C 15/08, C03C 17/36, F24C 15/04

(54) **DISPOSITIF CHAUFFANT COMPRENANT UN SUBSTRAT VERRIER REVETU SUR SES DEUX FACES**
HEIZVORRICHTUNG MIT EINEM BEIDSEITIG BESCHICHTETEN VERGLASUNGSSUBSTRAT
HEATING DEVICE COMPRISING A GLAZING SUBSTRATE COATED ON BOTH SIDES

(30) Priorité: 26.12.2016 FR 1663391
(43) Date de publication de la demande: 30.10.2019
(73) Titulaire: SAINT-GOBAIN GLASS FRANCE, 92400 Courbevoie (FR)
(72) Inventeur: MORIN, Camille, 75010 Paris (FR); HUIGNARD, Arnaud, 60200 Compiegne (FR); URIEN, Mathieu, 94120 Fontenay Sous Bois (FR)
(74) Mandataire: Saint-Gobain Recherche
(86) Numéro de dépôt international: PCT/FR2017/053810
(87) Numéro de publication internationale: WO 2018/122515

(56) Documents cités:
- FR-A1- 3 030 495
- US-A1- 2003 113 550
- US-A1- 2013 089 684
- US-A1- 2013 129 945
- US-A1- 2014 010 976
- US-A1- 2014 237 917

## Description

L'invention concerne un dispositif chauffant muni d'une enceinte délimitant une cavité, ladite cavité étant fermée par une paroi ou une porte incorporant un vitrage confinant la chaleur dans la cavité du dispositif. L'invention concerne également un tel vitrage et son utilisation comme élément constitutif d'un tel dispositif.

Un dispositif chauffant comprend en général une enceinte délimitée par une ou plusieurs parois dont une porte vitrée. Des moyens de chauffage permettent le chauffage de la cavité à l'intérieur de l'enceinte à une température élevée. Les dispositifs chauffants peuvent être notamment choisis parmi les fours, les cheminées, les fourneaux...

Les vitrages utilisés comme éléments constitutifs d'une porte ou éventuellement d'une paroi d'un dispositif chauffant sont en général des vitrages multiples, c'est-à-dire des vitrages comprenant plusieurs substrats verriers, notamment des triples ou quadruple vitrages. Les vitrages multiples contribuent à maintenir la chaleur à l'intérieur du dispositif chauffant tout en gardant la surface extérieure du vitrage froide au toucher, pour la protection des utilisateurs contre les brûlures.

Un tel vitrage multiple comprend au moins deux substrats maintenus à distance de manière à délimiter un espace. Les faces du vitrage sont par convention désignées à partir de l'intérieur du dispositif chauffant et en numérotant les faces des substrats de l'intérieur vers l'extérieur du dispositif chauffant.

Les vitrages utilisés comme éléments constitutifs d'un dispositif chauffant peuvent comprendre des substrats revêtus de revêtements fonctionnels réfléchissants les rayonnements infrarouges (IR). Ces revêtements permettent de diminuer la quantité d'énergie dissipée vers l'extérieur du dispositif chauffant en réfléchissant la chaleur vers l'intérieur de l'enceinte. L'utilisation de ces revêtements concourt à réduire la consommation énergétique du dispositif chauffant tout comme l'échauffement de la paroi externe du vitrage constitutif de la porte dudit four.

Par exemple, la demande de brevet EP1293726 A2 décrit une barrière en verre comprenant sur une première surface un revêtement réfléchissant la chaleur déposé par pyrolyse et sur une deuxième surface un revêtement réfléchissant la chaleur déposé par un procédé de dépôt physique en phase vapeur (PVD).

Les revêtements comprenant des couches métalliques fonctionnelles à base d'argent (ou couches d'argent) sont connus comme les plus performants pour réduire l'émissivité des vitrages tout en préservant les qualités optiques et esthétiques de la paroi ou de la porte, notamment une bonne vision à travers celle-ci. Ces revêtements assurent également une meilleure protection des utilisateurs, une plus basse consommation énergétique et un plus grand confort d'utilisation.

Cependant, la résistance thermique des revêtements comprenant ces couches métalliques fonctionnelles à base d'argent est souvent insuffisante. La faible résistance chimique et thermique de ces revêtements peut se traduire à long terme par l'apparition de défauts tels que des points de corrosion, des rayures, le démouillage de l'argent, voire de l'arrachement total ou partiel de l'empilement.

Ce phénomène est accentué lorsque de tels vitrages incorporant des couches minces d'argent sont utilisés dans des dispositifs chauffants, par exemple comme porte de fours, et sont soumis à des cycles de traitement thermique à températures élevées longs et répétés dans un environnement humide, comme les traitements de pyrolyse. Ces cycles de traitement thermique en milieu humide accélèrent alors la dégradation des couches d'argent notamment par démouillage ou corrosion de l'argent.

Egalement, tout défaut ou rayure, qu'il soit dû à la corrosion ou à des sollicitations mécaniques, sont susceptibles d'altérer non seulement les performances énergétiques et optiques mais également l'esthétique du substrat revêtu.

La demande US 2012/0084963 divulgue cependant un vitrage multiple utilisé comme un élément constitutif d'une porte de four comprenant un substrat transparent revêtu d'un empilement de couches minces comprenant au moins une couche métallique fonctionnelle à base d'argent et une couche de protection supérieure à base d'oxyde de zirconium. Les couches à base d'oxyde de zirconium protègent l'empilement lors d'un traitement thermique à température élevée. Cependant, les substrats revêtus de telles couches de protection sont sujets à la corrosion en milieu humide à chaud.

La demande WO2016/097560 décrit un vitrage comprenant un substrat transparent revêtu d'un empilement de couches minces comprenant au moins une couche métallique fonctionnelle à base d'argent caractérisé en ce que l'empilement comprend une couche de protection supérieure à base d'oxyde de titane et de zirconium.

La demande US2003/0113550 décrit une fenêtre barrière à la chaleur comprenant des substrats de verre revêtus d'une combinaison de revêtements réfléchissant la chaleur.

Il est indiqué dans ces demandes qu'un tel empilement comprenant une couche fonctionnelle à base d'argent est suffisamment durable pour que l'empilement soit positionné en face 1 de la paroi du dispositif.

Bien que les empilements décrits dans les publications reportées précédemment permettent en principe de satisfaire les critères requis de résistance chimique et mécanique à la température habituelle de fonctionnement du four, il est actuellement encore recherché des configurations de paroi ou porte de four dont les performances d'isolation thermiques sont optimales et faciles à fabriquer, de préférence à moindre coût.

Il est en particulier recherché une architecture permettant non seulement de garantir une face extérieure froide de la paroi du coté extérieur, pour garantir la sécurité de l'utilisation, mais également de confiner efficacement la chaleur dans l'enceinte ou la cavité du dispositif. Egalement, il est recherché un dispositif qui est le plus économe possible en énergie, en particulier dont le refroidissement de la paroi ne nécessite pas ou peu d'action supplémentaire, comme par exemple la ventilation d'air de refroidissement au travers des différents vitrages constitutifs de ladite paroi.

L'objet de la présente invention est de proposer un dispositif chauffant et un vitrage pour entrer dans la constitution d'une porte ou d'une paroi d'un tel dispositif, permettant de résoudre efficacement les problèmes précédemment exposés.

Plus particulièrement, l'invention concerne un dispositif chauffant muni d'une enceinte délimitant une cavité, ledit dispositif comprenant une porte ou une paroi comprenant un vitrage de préférence multiple, ledit vitrage étant tel que décrit dans les revendications ci-jointes .

Selon des modes préférés de réalisation de l'invention, qui peuvent être le cas échéant combinés entre eux :
- Le premier empilement est positionné, dans le vitrage, au contact de la cavité du dispositif chauffant.
- Le premier empilement comprend comme couche fonctionnelle un oxyde d'indium et d'étain dans lequel le pourcentage atomique de Sn dans l'oxyde est avantageusement compris dans un domaine allant de 10 à 60%.
- Le premier empilement comprend successivement à partir du substrat :
   - une première sous-couche à base de nitrure de silicium,
   - une deuxième sous-couche à base d'oxyde de silicium,
   - une couche fonctionnelle d'ITO,
   - une première surcouche à base de nitrure de silicium,
   - une deuxième surcouche à base d'oxyde de silicium.
- Le premier empilement comprend successivement à partir du substrat :
   - au moins une sous couche d'un composé diélectrique notamment choisi parmi le nitrure de silicium, l'oxyde de silicium, l'oxyde d'étain et de zinc,
   - une première couche fonctionnelle d'ITO,
   - une couche intermédiaire d'un composé diélectrique, notamment choisi parmi l'oxyde de silicium, de nitrure de silicium ou d'oxyde d'étain et de zinc,
   - une deuxième couche fonctionnelle d'ITO,
   - au moins une surcouche d'un composé diélectrique notamment choisi parmi le nitrure de silicium, l'oxyde de silicium, ou l'oxyde d'étain et de zinc.
- Le second empilement comprend au moins une couche métallique fonctionnelle à base d'argent et au moins deux revêtements diélectriques, chaque revêtement diélectrique comportant au moins une couche diélectrique, de manière à ce que chaque couche à base d'argent soit disposée entre deux revêtements diélectriques.
- L"empilement comprend au moins une couche de blocage située en-dessous et au-contact d'une couche métallique fonctionnelle à base d'argent et/ou au moins une couche de blocage située au-dessus et au-contact d'une couche métallique fonctionnelle à base d'argent.
- Le second empilement présente une émissivité normale inférieure ou égale à 10%, de préférence inférieure à 5% et de préférence encore inférieure ou égale à 3%. Par « émissivité normale » d'un revêtement ou d'un empilement, on entend son émissivité normale à 283 K au sens de la norme NF-EN 12898 (2001), l'empilement étant normalement déposé sur un verre clair d'épaisseur 4 mm.
- L'empilement comprend :
   - un revêtement diélectrique situé en-dessous de la couche métallique fonctionnelle à base d'argent,
   - éventuellement une couche de blocage,
   - une couche métallique fonctionnelle à base d'argent,
   - éventuellement une couche de blocage,
   - un revêtement diélectrique situé au-dessus de la couche métallique fonctionnelle à base d'argent,
   - une couche de protection supérieure.
- L'empilement comprend :
   - un revêtement diélectrique situé en-dessous de la couche métallique fonctionnelle à base d'argent comprenant au moins une couche diélectrique à base de nitrure de silicium et/ou d'aluminium et éventuellement une couche diélectrique à fonction stabilisante à base d'oxyde de zinc ou d'oxyde d'étain et de zinc,
   - éventuellement une couche de blocage,
   - une couche métallique fonctionnelle à base d'argent,
   - éventuellement une couche de blocage,
   - un revêtement diélectrique situé au-dessus de la couche métallique fonctionnelle à base d'argent comprenant au moins une couche diélectrique à base de nitrure de silicium et/ou d'aluminium,
   - une couche de protection supérieure.
- Le substrat revêtu des deux empilements est bombé et/ou trempé.
- Ledit revêtement supplémentaire réfléchissant la chaleur comprend comme couche fonctionnelle un oxyde transparent conducteur choisi parmi l'oxyde d'indium et d'étain (ITO) ou un oxyde d'étain dopé pour le rendre conducteur électrique, notamment

l'oxyde d'étain dopé au fluor (SnO2 :F) ou l'oxyde d'étain dopé à l'antimoine (SnO2 : Sb) ou ledit revêtement supplémentaire réfléchissant la chaleur est un empilement comprenant comme couche fonctionnelle au moins une couche d'argent.
- Le vitrage est un vitrage double (c'est-à-dire avec deux substrats verriers).
- Le vitrage est un vitrage triple (c'est-à-dire avec trois substrats verriers).
- Le vitrage est un vitrage quadruple (c'est-à-dire avec quatre substrats verriers).

L'invention porte également sur le vitrage décrit précédemment comprenant une pluralité de substrats transparents dont un substrat revêtu sur chaque face d'un empilement de couches minces, dont :
- sur une première face, tournée vers l'extérieur dudit vitrage, un premier empilement réfléchissant la chaleur essentiellement grâce à une ou plusieurs couches fonctionnelles à base d'un oxyde mixte d'étain et d'indium,
- sur l'autre face, tournée vers l'intérieur du vitrage, un second empilement réfléchissant la chaleur essentiellement grâce à une ou plusieurs couches fonctionnelles à base d'un métal choisi parmi l'or ou de préférence l'argent.

En outre un autre objet de la présente invention est une paroi ou une porte pour dispositif chauffant comprenant un vitrage tel que décrit précédemment, en particulier l'utilisation d'un tel vitrage comme élément constitutif de la paroi ou d'une porte d'un dispositif chauffant muni d'une enceinte et/ou d'une cavité tel qu'un four. Bien entendu, toutes les caractéristiques décrites précédemment en relation avec le dispositif chauffant concernent également ladite paroi ou porte, bien qu'elles ne soient pas reprises ici pour des questions de concision.

On donne ci-après d'autres détails de mise en oeuvre et/ou de réalisation de la présente invention :
Le vitrage est de préférence choisi parmi les vitrages multiples comprenant au moins deux substrats transparents, qui peuvent être clairs ou teintés selon l'invention. Ainsi, le vitrage selon l'invention peut comprendre un ou plusieurs substrats transparents revêtus d'un empilement de couches minces sur chacune de ses faces tel que décrit précédemment. Egalement le vitrage selon l'invention peut comprendre un ou plusieurs substrats transparents revêtus d'un empilement de couches minces sur chacune de ses faces tel que décrit précédemment, ledit substrat faisant face à la cavité de l'enceinte et l'empilement réfléchissant la chaleur essentiellement grâce à une ou plusieurs couches fonctionnelles en oxyde transparent conducteur ITO étant disposé immédiatement au contact de l'atmosphère de la cavité.

Les substrats transparents utilisés selon l'invention sont de préférence en un matériau rigide minéral, comme en verre, notamment silico-sodo-calcique, borosilicate, aluminosilicate ou vitrocéramique. Selon un mode de réalisation avantageux, les substrats sont des verres borosilicates qui résistent bien à de très hautes températures. L'épaisseur du ou des substrats varie généralement entre 0,5 mm et 19 mm. L'épaisseur du ou des substrats est de préférence inférieure ou égale à 6 mm, voire inférieure ou égale 4 mm. Le substrat transparent revêtu des deux empilements peut avoir subi un traitement thermique à température élevée choisi parmi un recuit, par exemple par un recuit flash tel qu'un recuit laser ou flammage, une trempe et/ou un bombage. La température du traitement thermique est supérieure à 400 °C, de préférence supérieure à 450°C, et mieux supérieure à 500 °C. Le substrat revêtu de l'empilement peut donc être bombé et/ou trempé. Le substrat revêtu des empilements sur chaque face est de préférence un verre trempé notamment lorsqu'il fait partie d'un vitrage utilisé dans comme élément constitutif d'un dispositif chauffant ou d'une porte anti-feu.

Selon un mode de réalisation, le vitrage est double et comporte deux substrats, un substrat extérieur et un substrat intérieur et 4 faces. La face 1 est à l'intérieur du dispositif chauffant et constitue donc la paroi intérieure du vitrage. Les faces 2 et 3 sont à l'intérieur du double vitrage. La face 4 est à l'extérieur du dispositif chauffant et constitue donc la paroi extérieure du vitrage.

Selon un autre mode de réalisation, le vitrage est triple et comporte trois substrats, un substrat extérieur, un substrat central et un substrat intérieur, et 6 faces. La face 1 à l'intérieur du dispositif chauffant et constitue donc la paroi intérieure du vitrage. Les faces 2 à 5 sont à l'intérieur du triple vitrage. La face 6 est à l'extérieur du dispositif chauffant et constitue donc la paroi extérieure du vitrage.

Selon un autre mode de réalisation, le vitrage est quadruple et comporte trois substrats, un substrat extérieur, un substrat central et un substrat intérieur, et 8 faces. La face 1 à l'intérieur du dispositif chauffant et constitue donc la paroi intérieure du vitrage. Les faces 2 à 7 sont à l'intérieur du quadruple vitrage. La face 8 est à l'extérieur du dispositif chauffant et constitue donc la paroi extérieure du vitrage ou du dispositif chauffant selon l'invention.

En ce qui concerne le premier empilement comprenant une ou plusieurs couches fonctionnelles en oxyde transparent conducteur en tant que couche fonctionnelle réfléchissant la chaleur (et donc pas d'autres couches conductrices notamment en un métal tel que l'argent), on utilise selon l'invention tout revêtement comprenant une couche fonctionnelle à base de et de préférence en oxyde transparent conducteur du type ITO, c'est-à-dire basé sur un oxyde mixte entre l'étain et l'indium. Par l'expression « à base de », on entend notamment au sens de la présente invention que la couche concernée comprend au moins 80%, voire 90% et même 95% en poids du composé considéré. La couche peut même être avantageusement constituée ou essentiellement constituée d'un tel composé. Ces couches conductrices et néanmoins transparentes présentent en effet de faibles émissivités, corrélées avec des faibles résistivités ou résistances carrées. Ce sont des couches de matériaux obtenues par dépôt sous vide par pulvérisation cathodique, éventuellement assistée par champ magnétique («Magnétron»). De façon surprenante, il a été trouvé selon la présente invention que de tels empilements, présentaient de performances supérieures, en termes d'isolation thermique, à un empilement dont la couche fonctionnelle est à base d'oxyde d'étain dopé au fluor (SnO2:F). Ce dernier matériau est habituellement déposé par voie chimique, comme par exemple par dépôt de vapeur chimique (« CVD »), éventuellement améliorée par plasma (« PECVD »). Plus particulièrement, de façon inattendue, des performances très supérieures ont été obtenues lorsque ces empilements à base d'ITO étaient combinés, sur l'autre face du substrat verrier, à un revêtement de faible émissivité comprenant une couche fonctionnelle (réflective) en argent. De préférence, l'empilement déposé est un empilement dont la ou les couches fonctionnelles sont à base d'ITO. Le pourcentage atomique de Sn dans l'oxyde est avantageusement compris dans un domaine allant de 5 à 70%, notamment de 10 à 60%. Plus particulièrement, selon l'invention, on utilise de préférence une couche d'un mélange d'oxyde d'indium(III) (In2O3) et d'oxyde d'étain (IV) (SnO2), dans la proportion massique d'environ 85 à 95 % du premier et d'environ 15 à 5 % du second.

Selon un mode très préféré de la présente invention, l'empilement déposé sur la première face est un empilement comprenant deux couches fonctionnelles à base d'ITO, les deux couches fonctionnelles étant séparées par au moins une couche d'un matériau diélectrique.

Chaque couche à base d'ITO peut notamment posséder une épaisseur physique comprise dans un domaine allant de 20 à 80 nm, notamment de 30 à 80 nm. L'épaisseur physique cumulée de toutes les couches à base d'ITO est de préférence comprise dans un domaine allant de 40 à 200 nm, notamment de 60 à 160 nm.

La ou chaque couche intermédiaire diélectrique est de préférence à base d'un composé choisi parmi les oxydes, les nitrures ou les oxynitrures de silicium, d'aluminium, de titane, d'étain, de zinc, de zirconium, de niobium, de nickel, de chrome ou d'un de leurs mélanges. Elle est de préférence essentiellement constituée d'un tel composé, voire constituée d'un tel composé.

Plus particulièrement, la (ou les) couche intermédiaire diélectrique est de préférence essentiellement constituée d'un composé choisi parmi un oxyde, nitrure ou oxynitrure de silicium et/ou d'aluminium, un nitrure ou un oxyde de titane, un oxyde de nickel et de chrome, un nitrure de niobium, un oxyde d'étain et de zinc. De manière préférée, la ou chaque couche intermédiaire diélectrique est à base (ou essentiellement constituée) d'oxyde de silicium, de nitrure de silicium, d'oxyde de titane, d'oxyde d'étain et de zinc. L'oxyde ou le nitrure de silicium sont particulièrement préférés. Le nitrure de silicium ou l'oxyde d'étain et de zinc sont particulièrement appréciés car leur indice de réfraction est proche de celui de l'ITO, si bien que leur présence ne perturbe pas les propriétés optiques de l'empilement. De préférence, l'indice de réfraction pour une longueur d'onde de 550 nm de la (ou les) couche intermédiaire (notamment de l'unique couche intermédiaire) est d'au moins 1,8, notamment 1,9, avantageusement compris dans un domaine allant de 1,8 à 2,5, notamment de 1,9 à 2,2. Le nombre de couches intermédiaires séparant les couches à base d'ITO varie de préférence de 1 à 5, notamment de 1 à 3 ou de 1 ou 2. Avantageusement, l'empilement de couches minces comprend au moins deux couches (notamment deux couches) à base d'un oxyde transparent électro-conducteur séparées par au plus deux couches intermédiaires, notamment par une seule couche intermédiaire.

Parmi les combinaisons préférées, l'empilement comprend (ou est constitué de) successivement à partir du substrat :
- une couche d'adhésion, par exemple à base ou essentiellement constituée de silice,
- une première couche d'ITO,
- une couche intermédiaire diélectrique, par exemple à base ou essentiellement constituée de silice, de nitrure de silicium ou d'oxyde d'étain et de zinc,
- une deuxième couche d'ITO,
- une couche barrière à l'oxygène, par exemple à base ou essentiellement constituée de nitrure de silicium,
- une couche à bas indice de réfraction, par exemple à base ou essentiellement constituée de silice.

En ce qui concerne le second empilement réfléchissant la chaleur essentiellement grâce à une ou plusieurs couches fonctionnelles à base d'un métal choisi parmi l'or ou de préférence l'argent :
Les couches à base d'or ou de préférence à base d'argent sont déposées entre des revêtements diélectriques qui comprennent généralement plusieurs couches diélectriques permettant d'ajuster les propriétés optiques de l'empilement et permettre une transmission lumineuse suffisante pour permettre la vision extérieure de l'enceinte. Ces couches diélectriques permettent en outre de protéger la couche d'argent des agressions chimiques ou mécaniques. L'empilement de couches minces comprend donc avantageusement au moins une couche métallique fonctionnelle à base d'argent, au moins deux revêtements diélectriques, chaque revêtement diélectrique comportant au moins une couche diélectrique, de manière à ce que chaque couche métallique fonctionnelle soit disposée entre deux revêtements diélectriques.

L'empilement est déposé par pulvérisation cathodique, notamment assistée par un champ magnétique (procédé magnétron). Selon ce mode de réalisation avantageux, toutes les couches de l'empilement sont déposées par pulvérisation cathodique assistée par un champ magnétique.

Sauf mention contraire, les épaisseurs évoquées dans le présent document sont des épaisseurs physiques. On entend par couche mince, une couche présentant une épaisseur comprise entre 0,1 nm et 200 micromètres, suivant sa nature et sa composition.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une ou plusieurs couches intercalées entre ces deux couches.

La couche métallique fonctionnelle est typiquement à base d'argent et comprend en général au moins 80 %, de préférence au moins 90 % et mieux au moins 95 %, voire au moins 98% en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

L'épaisseur des couches fonctionnelles à base d'argent est par ordre de préférence croissant comprise de 5 à 20 nm, de 8 à 15 nm.

L'empilement peut comprendre au moins une couche de blocage dont la fonction est de protéger les couches d'argent en évitant une éventuelle dégradation liée au dépôt d'un revêtement diélectrique ou liée à un traitement thermique. Ces couches de blocages sont situées de préférence au-contact des couches métalliques fonctionnelles à base d'argent.

L'empilement peut comprendre au moins une couche de blocage située en-dessous et au-contact d'une couche métallique fonctionnelle à base d'argent et/ou au moins une couche de blocage située au-dessus et au-contact d'une couche métallique fonctionnelle à base d'argent.

Parmi les couches de blocage traditionnellement utilisées, on peut citer les couches de blocage à base d'un métal choisi parmi le niobium Nb, le tantale Ta, le titane Ti, le chrome Cr ou le nickel Ni ou à base d'un alliage obtenu à partir d'au moins deux de ces métaux, notamment d'un alliage de nickel et de chrome (NiCr).

L'épaisseur de chaque surcouche ou sous-couche de blocage est de préférence :
- d'au moins 0,2 nm ou d'au moins 0,5 nm et/ou
- d'au plus 5,0 nm ou d'au plus 2,0 nm.

Les revêtements diélectriques présentent une épaisseur supérieure à 15 nm, de préférence comprise entre 15 et 50 nm et mieux de 30 à 45 nm.

On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les couches diélectriques à fonction barrière peuvent être à base de composés de silicium et/ou d'aluminium choisis parmi les oxydes tels que SiO₂, les nitrures tels que les nitrure de silicium Si₃N₄ et les nitrures d'aluminium AIN, et les oxynitrures SiOₓN_{y}, éventuellement dopé à l'aide d'au moins un autre élément. Les couches diélectriques à fonction barrière peuvent également être à base d'oxyde de zinc et d'étain.

On entend par couches diélectriques à fonction stabilisante, une couche en un matériau apte à stabiliser l'interface entre la couche fonctionnelle et cette couche. Les couches diélectriques à fonction stabilisante sont de préférence à base d'oxyde cristallisé, notamment à base d'oxyde de zinc, éventuellement dopé à l'aide d'au moins un autre élément, comme l'aluminium. La ou les couches diélectriques à fonction stabilisante sont de préférence des couches d'oxyde de zinc.

La ou les couches diélectriques à fonction stabilisante peuvent se trouver au-dessus et/ou en-dessous d'au moins une couche métallique fonctionnelle à base d'argent ou de chaque couche métallique fonctionnelle à base d'argent, soit directement à son contact ou soit séparées par une couche de blocage.

Selon un mode de réalisation avantageux, La couche diélectrique à base de nitrure de silicium et/ou d'aluminium est de préférence au-contact de la couche de protection supérieure qui peut être avantageusement à base d'oxyde de titane ou à base d'oxyde de titane et de zirconium tel que décrit dans la demande WO2016/097560. La couche diélectrique à base de nitrure de silicium et/ou d'aluminium a notamment une épaisseur :
- inférieure ou égale à 100 nm, inférieure ou égale à 50 nm ou inférieure ou égale à 45 nm, et/ou
- supérieure ou égale à 15 nm, supérieure ou égale à 20 nm ou supérieure ou égale à 25 nm.

Selon ce mode de réalisation, l'empilement peut par exemple comprendre :
- un revêtement diélectrique situé en-dessous de la couche métallique fonctionnelle à base d'argent,
- éventuellement une couche de blocage,
- une couche métallique fonctionnelle à base d'argent,
- éventuellement une couche de blocage,
- un revêtement diélectrique situé au-dessus de la couche métallique fonctionnelle à base d'argent,
- une couche de protection supérieure.

Selon un mode de réalisation, l'empilement comprend :
- un revêtement diélectrique situé en-dessous de la couche métallique fonctionnelle à base d'argent comprenant au moins une couche diélectrique à base de nitrure de silicium et/ou d'aluminium et éventuellement une couche diélectrique à fonction stabilisante à base d'oxyde de zinc,
- éventuellement une couche de blocage,
- une couche métallique fonctionnelle à base d'argent,
- éventuellement une couche de blocage,
- un revêtement diélectrique situé au-dessus de la couche métallique fonctionnelle à base d'argent comprenant au moins une couche diélectrique à base de nitrure de silicium et/ou d'aluminium,
- une couche de protection supérieure.

Selon un autre mode possible de réalisation de l'invention, le second empilement peut comprendre plusieurs couches fonctionnelles à base d'un métal choisi parmi l'or ou de préférence l'argent, et en particulier deux ou trois couches en argent, chacune d'elle étant séparée de la suivante de préférence par au moins une couche de matériau diélectrique notamment tels que ceux précédemment décrits.

Selon un tel mode de réalisation, l'empilement peut par exemple comprendre :
- un revêtement diélectrique situé en-dessous de la couche métallique fonctionnelle à base d'argent,
- éventuellement une couche de blocage,
- une première couche métallique fonctionnelle à base d'argent,
- éventuellement une couche de blocage,
- un revêtement diélectrique situé au-dessus de la première couche métallique fonctionnelle à base d'argent,
- éventuellement une couche de blocage,
- une deuxième couche métallique fonctionnelle à base d'argent,
- éventuellement une couche de blocage,
- un revêtement diélectrique situé au-dessus de la deuxième couche métallique fonctionnelle à base d'argent,
- une couche de protection supérieure.

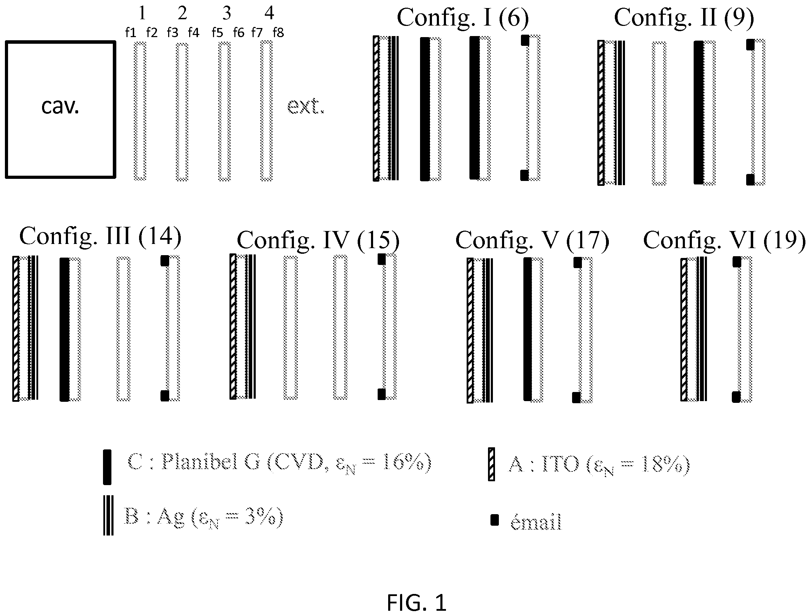

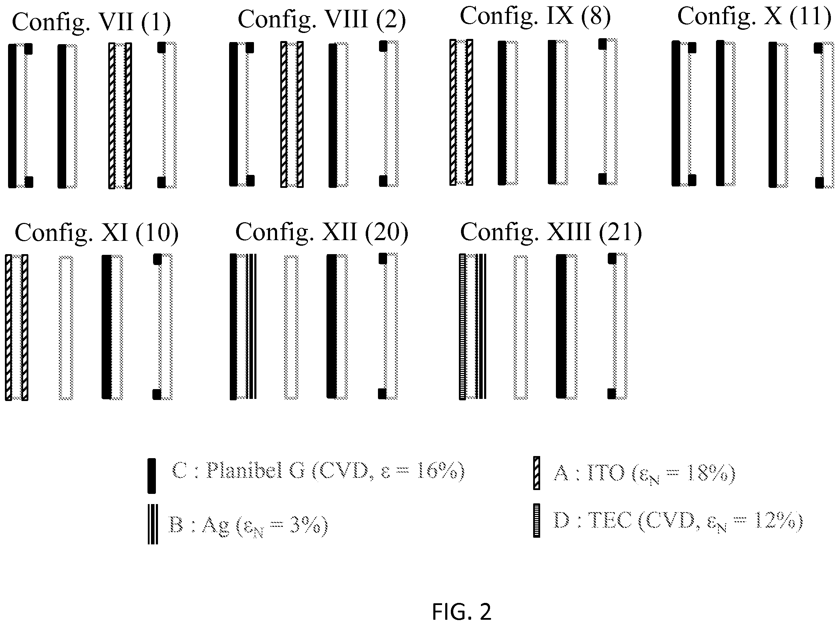

On donne ci-après différents modes de réalisation de la présente invention, en relation avec la figure 1 ci-joint annexée :
La figure 1 illustre trois exemples de dispositifs chauffants comprenant des vitrages multiples selon l'invention, un vitrage comprenant 4 substrats (configurations I à IV), un triple vitrage (configuration V) et un double vitrage (configuration VI).

### Exemples

Selon l'invention, des empilements de couches minces définis ci-après sont déposés sur un premier substrat en verre clair sodo-calcique clair d'une épaisseur de 4mm.

Sur une première face du substrat, on dépose un empilement conforme à l'exemple 1 de la demande WO2015/033067.

Plus précisément, on a déposé par pulvérisation cathodique magnétron AC sur un substrat de verre clair silico-sodo-calcique de 4 mm d'épaisseur l'empilement A suivant:
Verre / SiNₓ (2nm) / SiO₂ (34nm) / ITO (118nm) / SiNₓ (6nm) / SiO₂ (65nm) / TiO₂ (3nm).

Les chiffres entre parenthèses correspondent aux épaisseurs physiques déposées pour chaque couche, exprimées en nanomètres.

Les couches d'oxyde de silicium et de nitrure de silicium ont été déposées à l'aide de cibles de silicium dopé à l'aluminium (8% atomique) sous un plasma d'argon avec ajout respectivement d'oxygène et d'azote. Les couches d'ITO ont été déposées à l'aide de cibles d'ITO sous un plasma d'argon. La couche d'ITO est constituée d'un mélange d'oxyde d'indium(III) (In2O3) et d'oxyde d'étain (IV) (SnO2), dans la proportion massique d'environ 90 % du premier et d'environ 10 % du second. La couche barrière de SiNₓ a été déposée sous une pression de 2,0 µbar. L'émissivité normale de cet empilement, telle que mesurée selon la norme FR-EN 12898, est de 18%.

Sur la deuxième face du substrat, on dépose selon les techniques classiques de dépôt par pulvérisation cathodique l'empilement B suivant comportant une couche fonctionnelle d'argent, et dont l'émissivité normale est de 3% :
Verre / SiNₓ (30nm) / ZnO (5nm) / NiCr (0,5nm) / Ag (12nm) / NiCr (0,5nm) / ZnO (5nm) / SiNₓ (30nm) / TiO₂ (3nm).

On a ensuite monté ce substrat revêtu sur ces deux faces dans la paroi d'un four, en association avec un ou plusieurs autres substrats verriers comme indiqué sur les configurations illustrées par la figure 1.

Selon l'invention, le substrat précédemment décrit est positionné directement au contact de l'enceinte du four, de telle façon que le premier empilement, dont la couche fonctionnelle est en ITO, est tournée vers ladite enceinte (face 1 du vitrage) et le second empilement dont la couche fonctionnelle est en argent est positionnée en face 2 du vitrage constitutif de la paroi du four.

Selon les configurations I à IV, la paroi comprend quatre substrats verriers :
- un premier substrat selon l'invention tel que décrit précédemment,
- puis trois substrats verriers successifs, dont les faces sont numérotées successivement de 2 à 8 (cf. figure 1).

Selon la configuration I, les deux substrats intermédiaires sont des produits verriers commercialisés par la société AGC sous la référence Planibel G^{®}. Ils comprennent chacun sur une face un revêtement C déposé par pyrolyse-CVD et constitué d'une couche d'oxyde d'étain dopé au fluor. La face comprenant le revêtement est tournée vers la cavité du four (c'est-à-dire en face 3 et 5 de la paroi). La configuration III est identique à la configuration Il mais le deuxième substrat n'est revêtu d'aucun empilement de couches minces.
La configuration IV est identique à la configuration Il mais le troisième substrat n'est revêtu d'aucun empilement de couches minces.

Selon la configuration V, la paroi comprend seulement trois substrats verriers : un premier substrat selon l'invention tel que décrit précédemment, puis deux substrats verriers successifs, dont les faces sont numérotées successivement de 2 à 6. Le substrat intermédiaire est un Planibel G^{®} et le revêtement est positionné en face 3 du vitrage.

Selon la configuration VI, la paroi comprend uniquement deux substrats verriers : un premier substrat selon l'invention tel que décrit précédemment, puis un substrat qui n'est revêtu d'aucun empilement de couches minces.

Dans un deuxième temps, on a préparé des configurations comparatives, dans lesquelles on a positionné les différents empilements réfléchissant la chaleur sur d'autres faces du vitrage quadruple. Plus précisément :
- Selon la configuration VII, on a positionné le revêtement C (Planibel) sur les faces 1 et 3 et l'empilement A (ITO) sur les faces 5 et 6 du vitrage.
- Selon la configuration VIII, on a positionné l'empilement C sur les faces 1 et 5 et l'empilement A sur les faces 3 et 4 du vitrage.
- Selon la configuration IX, on a positionné l'empilement A sur les faces 1 et 2 et le revêtement C sur les faces 3 et 5 du vitrage.
- Selon la configuration X, on a positionné l'empilement A sur les faces 1, 3 et 5 du vitrage.
- Selon la configuration XI, on a positionné l'empilement A sur les faces 1 et 2 et le revêtement C sur la face 5 du vitrage.

On a également préparé à titre comparatif deux configurations conformes à l'enseignement de la demande EP1293726A2, comprenant des couches d'oxyde transparent conducteur déposées par pyrolyse CVD en face 1 du vitrage.

Pour ce faire, on utilise, comme premier substrat au contact de la cavité, deux substrats verriers commerciaux comprenant sur une face une couche de SnO2 :F déposé par CVD-pyrolyse :
- le produit verrier Planibel décrit précédemment,
- un produit verrier commercialisé par la société NSG sous la référence TEC^{®}, dans laquelle l'empilement réfléchissant la chaleur présente une émissivité de 12% (revêtement D).
Plus précisément,
- Selon la configuration XII, on dépose sur le produit Planibel, sur la face non recouverte par l'empilement pyrolytique, l'empilement B à base d'argent décrit précédemment. Ce substrat comparatif est positionné en remplacement du premier substrat selon l'invention dans la paroi à quatre substrats de l'exemple II, la couche fonctionnelle pyrolytique (le revêtement C) étant tournée vers ladite enceinte (face 1 du vitrage).
- Selon la configuration XIII, on dépose, sur la face du produit TEC non recouverte par l'empilement pyrolytique, l'empilement B à base d'argent décrit précédemment. Ce substrat comparatif est positionné en remplacement du premier substrat selon l'invention dans la paroi à quatre substrats de l'exemple II, la couche fonctionnelle pyrolytique (le revêtement D) étant tournée vers ladite enceinte (face 1 du vitrage).

L'enceinte munie des différentes portes est ensuite chauffé à une température de l'ordre de 425°C à 430°C et les températures entre chaque substrat constitutif de la paroi sont classiquement mesurées à l'aide de thermocouples.
Les résultats sont reportés dans le tableau 1 ci-dessous :
Dans le tableau 1 on note A une face revêtue par l'empilement A (comprenant la couche fonctionnelle d'ITO et d'émissivité 18%), B une face revêtue par l'empilement B (comprenant la couche fonctionnelle d'argent), C une face revêtue par le revêtement C (comprenant la couche pyrolytique SnO₂ :F d'émissivité 16%), D une face revêtue par le revêtement D (comprenant la couche pyrolytique SnO₂ :F d'émissivité 12%) et X une face non revêtue.

**Tableau 1**

| essai | F1 | F2 | F3 | F4 | F5 | F6 | F7 | F8 | Porte extérieure | verre intermédiaire | | | Cavité |
|---|---|---|---|---|---|---|---|---|---|---|---|---|---|
| | | | | | | | | | Tmax porte | Tmax (S1-S2) | Tmax (S2-S3) | Tmax (S3-S4) | Tmoy |
| I | A | B | C | X | C | X | X | X | 65 | 133 | 135 | 99 | 431 |
| II | A | B | X | X | C | X | X | X | 63 | 118 | 130 | 84 | 430 |
| III | A | B | C | X | X | X | X | X | 67 | 108 | 119 | 69 | 428 |
| IV | A | B | X | X | X | X | X | X | 65 | 146 | 119 | 71 | 421 |
| V | A | B | C | X | X | X | - | - | 65 | 175 | 102 | NA | 423 |
| VI | A | B | X | X | - | - | - | - | 70 | 158 | NA | NA | 423 |
| VII | C | X | C | X | A | A | X | X | 67 | 236 | 152 | 108 | 426 |
| VIII | C | X | A | A | C | X | X | X | 71 | 241 | 161 | 102 | 427 |
| IX | A | A | C | X | C | X | X | X | 68 | 233 | 147 | 86 | 424 |
| X | C | X | C | X | C | X | X | X | 71 | 239 | 162 | 103 | 425 |
| XI | A | A | X | X | C | X | X | X | 68 | 231 | 158 | 92 | 423 |
| XII | C | B | X | X | C | X | X | X | 60 | 217 | 169 | 76 | 426 |
| XIII | D | B | X | X | C | X | X | X | 62 | 131 | 146 | 77 | 429 |

Dans le tableau 1, « Tmax porte » indique la température maximale mesurée sur la porte extérieure, « Tmax S1-S2 » la température maximale mesurée dans l'espace entre le substrat 1 et le substrat 2, « Tmax S2-S3 » la température maximale mesurée dans l'espace entre le substrat 2 et le substrat 3, « Tmax S3-S4 » la température maximale mesurée dans l'espace entre le substrat 3 et le substrat 4.

Les résultats reportés dans le tableau 1 démontrent les avantages de la présente invention : les exemples I à IV selon l'invention comprenant une paroi dont le premier substrat est revêtu, sur la face tournée vers la cavité du four, d'un revêtement comprenant une couche fonctionnelle d'ITO et sur l'autre face d'un revêtement comprenant une couche fonctionnelle d'argent permettent une meilleure isolation de ladite cavité, comme le montre la diminution sensible de la température dans l'espace entre ledit premier substrat et le second substrat. La diminution de température entre les deux premiers substrats, observée grâce à la configuration particulière des empilements présents sur le premier substrat, permet ainsi une meilleure isolation de la cavité, ce qui se traduit par plusieurs avantages :
- Dans le cas d'un four à pyrolyse, une telle amélioration de l'isolation permet de limiter la chauffe nécessaire pour maintenir les hautes températures nécessaire à ladite pyrolyse.
- Lors du fonctionnement normal du four pour la cuisson des aliments (c'est-à-dire à une température maximale de 240°C), cette meilleure isolation permet de réduire significativement la consommation énergétique du four et donc d'en améliorer le classement énergétique.
- Egalement la ventilation nécessaire au refroidissement des parties verrières de la paroi peut être fortement réduite, voire supprimée.

Selon un autre avantage, il devient possible selon l'invention d'utiliser dans de telles parois des empilements dont la couche fonctionnelle est en argent et qui ne sont pas spécifiquement configurés pour résister à la chaleur, en raison de la diminution sensible de la température « subie » par lesdits revêtements lors des phases de nettoyage du four par pyrolyse.
En outre, l'utilisation d'une paroi selon l'invention pourrait permettre de simplifier la configuration de la porte (configuration à 3 verres plutôt que 4), comme le démontre l'exemple IV, tout en assurant les niveaux de sécurité requis.
Enfin dans le cas d'un four conventionnel (non pyrolytique) dont la paroi ne comprendrait que deux ou trois substrats verriers, on peut voir que des niveaux d'isolation tout à fait convenable, et même améliorés, peuvent être obtenus.

La comparaison des exemples II, XII et XIII montre que seule la combinaison particulière de revêtements selon l'invention permet d'obtenir un tel résultat. En particulier, de manière très surprenante et inattendue, on démontre que le remplacement d'un revêtement TCO pyrolytique à base d'oxyde d'étain par un empilement de couches à base d'ITO selon l'invention permet d'améliorer significativement les propriétés d'isolation de la paroi, alors même que l'émissivité mesurée pour lesdits revêtements TCO pyrolytique à base d'oxyde d'étain est inférieure à celle à celle dudit empilement de couches à base d'ITO.

Les exemples I, Il et III montre en outre, par comparaison avec l'exemple IV, que l'isolation thermique de la cavité peut encore être améliorée si un revêtement supplémentaire réfléchissant la chaleur, du type TCO (SnO2 :F ou ITO) ou empilement à l'argent, est disposé sur la face 3 et/ou 5 du vitrage, notamment en face 3 du vitrage.

## Revendications

1. Dispositif chauffant muni d'une enceinte délimitant une cavité, ledit dispositif comprenant une porte ou une paroi incorporant un vitrage multiple comprenant deux, trois ou quatre substrats, ledit vitrage comprenant au moins un substrat transparent revêtu sur chaque face d'un empilement de couches minces, dont :
- sur une première face, tournée vers ladite cavité, un premier empilement réfléchissant la chaleur essentiellement grâce à une ou plusieurs couches fonctionnelles à base d'un oxyde mixte d'étain et d'indium,
- sur l'autre face, tournée vers l'extérieur du dispositif, un second empilement réfléchissant la chaleur essentiellement grâce à une ou plusieurs couches fonctionnelles à base d'un métal choisi parmi l'or ou l'argent, de préférence l'argent, ledit vitrage comprenant au moins un revêtement supplémentaire réfléchissant la chaleur déposé sur au moins un autre substrat constitutif du vitrage et sur la troisième face et/ou sur la cinquième face du vitrage, de l'intérieur vers l'extérieur dudit dispositif chauffant, ledit premier empilement comprenant comme couche fonctionnelle une couche d'oxyde d'indium et d'étain comprenant une proportion massique de 85 à 95 % d'oxyde d'indium et de 15 à 5 % d'oxyde d'étain ou dont le pourcentage atomique de Sn dans l'oxyde est compris dans un domaine allant de 5 à 70%.

2. Dispositif chauffant selon la revendication précédente, dans lequel le premier empilement est positionné, dans le vitrage, au contact de la cavité du dispositif chauffant.

3. Dispositif chauffant selon l'une quelconque des revendications précédentes, dans lequel que le premier empilement comprend comme couche fonctionnelle un oxyde d'indium et d'étain dont le pourcentage atomique de Sn dans l'oxyde est compris dans un domaine allant de 10 à 60%.

4. Dispositif chauffant selon l'une quelconque des revendications précédentes, dans lequel le premier empilement comprend successivement à partir du substrat :
- au moins une sous couche d'un composé diélectrique notamment choisi parmi le nitrure de silicium, l'oxyde de silicium, ou l'oxyde d'étain et de zinc
- une couche fonctionnelle d'ITO,
- au moins une surcouche d'un composé diélectrique notamment choisi parmi le nitrure de silicium, l'oxyde de silicium, ou l'oxyde d'étain et de zinc.

5. Dispositif chauffant selon l'une quelconque des revendications précédentes, dans lequel le premier empilement comprend successivement à partir du substrat :
- au moins une sous couche d'un composé diélectrique notamment choisi parmi le nitrure de silicium, l'oxyde de silicium, l'oxyde d'étain et de zinc,
- une première couche fonctionnelle d'ITO,
- une couche intermédiaire d'un composé diélectrique, notamment choisi parmi l'oxyde de silicium, de nitrure de silicium ou d'oxyde d'étain et de zinc,
- une deuxième couche fonctionnelle d'ITO,
- au moins une surcouche d'un composé diélectrique notamment choisi parmi le nitrure de silicium, l'oxyde de silicium, ou l'oxyde d'étain et de zinc.

6. Dispositif chauffant selon l'une quelconque des revendications précédentes, dans lequel le second empilement comprend au moins une couche métallique fonctionnelle à base d'argent et au moins deux revêtements diélectriques, chaque revêtement diélectrique comportant au moins une couche diélectrique, de manière à ce que chaque couche à base d'argent soit disposée entre deux revêtements diélectriques.

7. Dispositif chauffant selon l'une quelconque des revendications précédentes, dans lequel le second empilement présente une émissivité normale, telle que mesurée selon la norme EN 12898, inférieure ou égale à 10%, de préférence inférieure ou égale à 5% et de préférence encore inférieure ou égale à 3%.

8. Dispositif chauffant selon l'une quelconque des revendications précédentes dans lequel au moins le substrat revêtu de l'empilement est bombé et/ou trempé et de préférence dans lequel tous les substrats du vitrage sont trempés.

9. Dispositif chauffant selon la revendication 1, dans lequel ledit revêtement supplémentaire réfléchissant la chaleur est disposé sur la troisième face du vitrage, de l'intérieur vers l'extérieur dudit dispositif chauffant.

10. Dispositif chauffant selon la revendication 1, dans lequel ledit revêtement supplémentaire réfléchissant la chaleur est disposé sur la cinquième face du vitrage, de l'intérieur vers l'extérieur dudit dispositif chauffant.

11. Dispositif chauffant selon l'une des revendications 9 ou 10, dans lequel ledit revêtement supplémentaire réfléchissant la chaleur comprend comme couche fonctionnelle un oxyde transparent conducteur choisi parmi l'oxyde d'indium et d'étain (ITO) ou un oxyde d'étain dopé pour le rendre conducteur électrique, notamment l'oxyde d'étain dopé au fluor (SnO2 :F) ou l'oxyde d'étain dopé à l'antimoine (SnO2 :
Sb) ou dans lequel ledit revêtement supplémentaire réfléchissant la chaleur est un empilement comprenant comme couche fonctionnelle au moins une couche d'argent.

12. Paroi ou porte pour dispositif chauffant comprenant un vitrage tel que décrit dans l'une des revendications précédentes, comprenant deux, trois ou quatre substrats transparents dont un substrat revêtu sur chaque face d'un empilement de couches minces, dont :
- sur une première face, tournée vers l'extérieur dudit vitrage, un premier empilement réfléchissant la chaleur essentiellement grâce à une ou plusieurs couches fonctionnelles à base d'un oxyde mixte d'étain et d'indium,
- sur l'autre face, tournée vers l'intérieur du vitrage, un second empilement réfléchissant la chaleur essentiellement grâce à une ou plusieurs couches fonctionnelles à base d'un métal choisi parmi l'or ou l'argent,
ledit vitrage comprenant au moins un revêtement supplémentaire réfléchissant la chaleur déposé sur au moins un autre substrat constitutif du vitrage et sur la troisième face et/ou sur la cinquième face du vitrage, de l'intérieur vers l'extérieur dudit dispositif chauffant, ledit premier empilement comprenant comme couche fonctionnelle une couche d'oxyde d'indium et d'étain comprenant une proportion massique de 85 à 95 % d'oxyde d'indium et de 15 à 5 % d'oxyde d'étain.

13. Utilisation d'un vitrage tel que décrit dans l'une des revendications 1 à 12, comprenant deux, trois ou quatre substrats transparents dont un substrat revêtu sur chaque face d'un empilement de couches minces, dont :
- sur une première face, tournée vers l'extérieur dudit vitrage, un premier empilement réfléchissant la chaleur essentiellement grâce à une ou plusieurs couches fonctionnelles à base d'un oxyde mixte d'étain et d'indium, ledit premier empilement comprenant comme couche fonctionnelle une couche d'oxyde d'indium et d'étain comprenant une proportion massique de 85 à 95 % d'oxyde d'indium et de 15 à 5 % d'oxyde d'étain.
- sur l'autre face, tournée vers l'intérieur du vitrage, un second empilement réfléchissant la chaleur essentiellement grâce à une ou plusieurs couches fonctionnelles à base d'un métal choisi parmi l'or ou l'argent,
ledit vitrage comprenant au moins un revêtement supplémentaire réfléchissant la chaleur déposé sur au moins un autre substrat constitutif du vitrage et sur la troisième face et/ou sur la cinquième face du vitrage, de l'intérieur vers l'extérieur dudit dispositif chauffant, comme élément constitutif de la paroi ou d'une porte d'un dispositif chauffant muni d'une enceinte et/ou d'une cavité tel qu'un four.

## Patentansprüche

1. Heizvorrichtung mit einer Umhüllung, die einen Hohlraum begrenzt, wobei die Vorrichtung eine Tür oder eine Wand umfasst, in die eine Mehrfachverglasung, umfassend zwei, drei oder vier Substrate integriert ist, wobei die Verglasung mindestens ein beschichtetes transparentes Substrat auf jeder Seite des Stapels aus dünnen Schichten umfasst, wobei:
- auf einer ersten Seite, die dem Hohlraum zugewandt ist, ein erster Stapel die Wärme im Wesentlichen aufgrund einer oder mehrerer funktioneller Schichten auf Basis eines Mischoxids aus Zinn und Indium reflektiert,
- auf der anderen Seite, die dem Äußeren der Vorrichtung zugewandt ist, ein zweiter Stapel die Wärme im Wesentlichen aufgrund einer oder mehrerer funktioneller Schichten auf Basis eines Metalls reflektiert, das ausgewählt ist aus Gold oder Silber, vorzugsweise Silber, wobei die Verglasung mindestens eine weitere die Wärme reflektierende Beschichtung umfasst, die auf mindestens einem anderen Substrat, welche die Verglasung bildet, abgeschieden ist, und auf der dritten Seite und/oder auf der fünften Seite der Verglasung, vom Inneren zum Äußeren der Heizvorrichtung, der erste Stapel als funktionelle Schicht eine Schicht aus Indiumoxid und Zinnoxid umfasst, die einen Massenanteil von 85 bis 95 % Indiumoxid und von 15 bis 5 % Zinnoxid umfasst, oder deren atomarer Prozentsatz von Sn in dem Oxyd einen Bereich von 5 bis 70 % umfasst.

2. Heizvorrichtung nach dem vorstehenden Anspruch, wobei der erste Stapel in der Verglasung in Kontakt mit dem Hohlraum der Heizvorrichtung positioniert ist.

3. Heizvorrichtung nach einem der vorstehenden Ansprüche, wobei der erste Stapel als funktionelle Schicht ein Indiumoxid und Zinnoxid umfasst, deren atomarer Prozentsatz von Sn in dem Oxyd einen Bereich von 10 bis 60 % umfasst.

4. Heizvorrichtung nach einem der vorstehenden Ansprüche, wobei der erste Stapel nachfolgend von dem Substrat ausgehend Folgendes umfasst:
- mindestens eine Unterschicht aus einer dielektrischen Verbindung, die insbesondere ausgewählt ist aus Siliziumnitrid, Siliziumoxid oder Zinnoxid und Zinkoxid
- eine funktionelle Schicht aus ITO,
- mindestens eine Oberschicht aus einer dielektrischen Verbindung, die insbesondere ausgewählt ist aus Siliziumnitrid, Siliziumoxid oder Zinnoxid und Zinkoxid.

5. Heizvorrichtung nach einem der vorstehenden Ansprüche, wobei der erste Stapel nachfolgend von dem Substrat ausgehend Folgendes umfasst:
- mindestens eine Unterschicht aus einer dielektrischen Verbindung, die insbesondere ausgewählt ist aus Siliziumnitrid, Siliziumoxid, Zinnoxid und Zinkoxid,
- eine erste funktionelle Schicht aus ITO,
- eine Zwischenschicht aus einer dielektrischen Verbindung, die insbesondere ausgewählt ist aus Siliziumoxid, Siliziumnitrid, oder Zinnoxid und Zinkoxid,
- eine zweite funktionelle Schicht aus ITO,
- mindestens eine Oberschicht aus einer dielektrischen Verbindung, die insbesondere ausgewählt ist aus Siliziumnitrid, Siliziumoxid oder Zinnoxid und Zinkoxid.

6. Heizvorrichtung nach einem der vorstehenden Ansprüche, wobei der zweite Stapel mindestens eine metallische funktionelle Schicht auf Basis von Silber und mindestens zwei dielektrische Beschichtungen umfasst, wobei jede dielektrische Beschichtung mindestens eine dielektrische Schicht umfasst, sodass jede Schicht auf Basis von Silber zwischen zwei dielektrischen Beschichtungen angeordnet ist.

7. Heizvorrichtung nach einem der vorstehenden Ansprüche, wobei der zweite Stapel ein normales Emissionsvermögen, gemessen nach dem Standard EN 12898, kleiner oder gleich 10 %, vorzugsweise kleiner oder gleich 5 % und mehr bevorzugt kleiner oder gleich 3 % aufweist.

8. Heizvorrichtung nach einem der vorstehenden Ansprüche, wobei das beschichtete Substrat des Stapels gewölbt und/oder gehärtet ist und wobei vorzugsweise alle Substrate der Verglasung gehärtet sind.

9. Heizvorrichtung nach Anspruch 1, wobei die weitere die Wärme reflektierende Beschichtung auf der dritten Seite der Verglasung, vom Inneren zum Äußeren der Heizvorrichtung, abgeschieden ist.

10. Heizvorrichtung nach Anspruch 1, wobei die weitere die Wärme reflektierende Beschichtung auf der fünften Seite der Verglasung, vom Inneren zum Äußeren der Heizvorrichtung, abgeschieden ist.

11. Heizvorrichtung nach einem der Ansprüche 9 oder 10, wobei die weitere die Wärme reflektierende Beschichtung als funktionelle Schicht ein transparentes leitendes Oxyd umfasst, das ausgewählt ist aus Indiumoxid und Zinnoxid (ITO) oder einem dotierten Zinnoxid, um es elektrisch leitend zu machen, insbesondere mit Fluor dotiertem Zinnoxid (SnO2:F) oder mit Antimon dotiertem Zinnoxid (SnO2: Sb) oder wobei die weitere die Wärme reflektierende Beschichtung ein Stapel ist, das als funktionelle Schicht mindestens eine Schicht aus Silber umfasst.

12. Wand oder Tür für die Heizvorrichtung, umfassend eine Verglasung wie in einem der vorstehenden Ansprüche beschrieben, umfassend zwei, drei oder vier transparente Substrate, von denen ein Substrat auf jeder Seite des Stapels aus dünnen Schichten beschichtet ist, wobei:
- auf einer ersten Seite, die dem Äußeren der Verglasung zugewandt ist, ein erster Stapel die Wärme im Wesentlichen aufgrund einer oder mehrerer funktioneller Schichten auf Basis eines Mischoxids aus Zinn und Indium reflektiert,
- auf der anderen Seite, die dem Inneren der Verglasung zugewandt ist, ein zweiter Stapel die Wärme im Wesentlichen aufgrund einer oder mehrerer funktioneller Schichten auf Basis eines Metalls, ausgewählt aus Gold oder Silber, reflektiert,
wobei die Verglasung mindestens eine weitere die Wärme reflektierende Beschichtung umfasst, die auf mindestens einem anderen die Verglasung bildenden Substrat abgeschieden ist, und auf der dritten Seite und/oder auf der fünften Seite der Verglasung, vom Inneren zum Äußeren der Heizvorrichtung, der erste Stapel als funktionelle Schicht eine Schicht aus Indiumoxid und Zinnoxid umfasst, die einen Massenanteil von 85 bis 95 % Indiumoxid und von 15 bis 5 % Zinnoxid umfasst.

13. Verwendung einer Verglasung, wie in einem der Ansprüche 1 bis 12 beschrieben, umfassend zwei, drei oder vier transparente Substrate, von denen ein Substrat auf jeder Seite des Stapels aus dünnen Schichten beschichtet ist, wobei:
- auf einer ersten Seite, die dem Äußeren der Verglasung zugewandt ist, ein erster Stapel die Wärme im Wesentlichen aufgrund einer oder mehrerer funktioneller Schichten auf Basis eines Mischoxids aus Zinn und Indium reflektiert, wobei der erste Stapel als funktionelle Schicht eine Schicht aus Indiumoxid und Zinnoxid umfasst, die einen Massenanteil von 85 bis 95 % Indiumoxid und von 15 bis 5 % Zinnoxid umfasst.
- auf der anderen Seite, die dem Inneren der Verglasung zugewandt ist, ein zweiter Stapel die Wärme im Wesentlichen aufgrund einer oder mehrerer funktioneller Schichten auf Basis eines Metalls, ausgewählt aus Gold oder Silber, reflektiert,
wobei die Verglasung mindestens eine weitere die Wärme reflektierende Beschichtung umfasst, die auf mindestens einem anderen die Verglasung bildenden Substrat abgeschieden ist, und auf der dritten Seite und/oder auf der fünften Seite der Verglasung, vom Inneren zum Äußeren der Heizvorrichtung,
als Bestandteil der Wand oder einer Tür einer Heizvorrichtung mit einer Umhüllung und/oder einem Hohlraum, wie einem Ofen.

## Claims

1. Heating device provided with an enclosure which delimits a cavity, said device comprising a door or a wall incorporating multiple glazing comprising two, three or four substrates, said glazing comprising at least one transparent substrate coated, on each face, with a stack of thin layers, including:
- on a first face, facing said cavity, a first stack which reflects the heat substantially owing to one or more functional layers based on a mixed indium tin oxide,
- on the other face, facing the outside of the device, a second stack which reflects the heat substantially owing to one or more functional layers based on a metal selected from gold or silver, preferably silver, said glazing comprising at least one additional heat-reflecting coating which is deposited on at least one other substrate constituting the glazing and on the third face and/or on the fifth face of the glazing when viewed from the inside to the outside of said heating device, said first stack comprising, as the functional layer, a layer of indium tin oxide which comprises a proportion by weight from 85 to 95% indium oxide and from 15 to 5% tin oxide or of which the atomic percentage of Sn in the oxide is in a range extending from 5 to 70%.

2. Heating device according to the preceding claim, wherein the first stack is positioned, in the glazing, in contact with the cavity of the heating device.

3. Heating device according to either of the preceding claims, wherein the first stack comprises, as the functional layer, an indium tin oxide, of which the atomic percentage of Sn in the oxide is in a range extending from 10 to 60%.

4. Heating device according to any of the preceding claims, wherein the first stack successively comprises from the substrate:
- at least one under-layer of a dielectric compound, in particular selected from silicon nitride, silicon oxide or zinc tin oxide,
- a functional layer of ITO,
- at least one over-layer of a dielectric compound, in particular selected from silicon nitride, silicon oxide or zinc tin oxide.

5. Heating device according to any of the preceding claims, wherein the first stack successively comprises from the substrate:
- at least one under-layer of a dielectric compound, in particular selected from silicon nitride, silicon oxide or zinc tin oxide,
- a first functional layer of ITO,
- an intermediate layer of a dielectric compound, in particular selected from silicon oxide, silicon nitride or zinc tin oxide,
- a second functional layer of ITO,
- at least one over-layer of a dielectric compound, in particular selected from silicon nitride, silicon oxide or zinc tin oxide.

6. Heating device according to any of the preceding claims, wherein the second stack comprises at least one silver-based functional metal layer and at least two dielectric coatings, each dielectric coating comprising at least one dielectric layer so that each silver-based layer is arranged between two dielectric coatings.

7. Heating device according to any of the preceding claims, wherein the second stack has a normal emissivity, as measured according to standard EN 12898, of less than or equal to 10%, preferably less than or equal to 5%, and even more preferably less than or equal to 3%.

8. Heating device according to any of the preceding claims, wherein at least the substrate coated with the stack is curved and/or tempered, and preferably wherein all the substrates of the glazing are tempered.

9. Heating device according to claim 1, wherein said additional heat-reflecting coating is arranged on the third face of the glazing when viewed from the inside to the outside of said heating device.

10. Heating device according to claim 1, wherein said additional heat-reflecting coating is arranged on the fifth face of the glazing when viewed from the inside to the outside of said heating device.

11. Heating device according to either of claims 9 or 10, wherein said additional heat-reflecting coating comprises, as the functional layer, a transparent conductive oxide selected from indium tin oxide (ITO) or a doped tin oxide to make it electrically conductive, in particular fluorine-doped tin oxide (Sn02:F) or antimony-doped tin oxide (SnO2: Sb), or wherein said additional heat-reflecting coating is a stack comprising, as the functional layer, at least one silver layer.

12. Wall or door for a heating device comprising glazing as described in any of the preceding claims, the glazing comprising two, three or four transparent substrates, including a substrate coated, on each face, with a stack of thin layers, including:
- on a first face, facing the outside of said glazing, a first stack which reflects the heat substantially owing to one or more functional layers based on a mixed indium tin oxide,
- on the other face, facing the inside of the glazing, a second stack which reflects the heat substantially owing to one or more functional layers based on a metal selected from gold or silver,
said glazing comprising at least one additional heat-reflecting coating which is deposited on at least one other substrate constituting the glazing and on the third face and/or on the fifth face of the glazing when viewed from the inside to the outside of said heating device, said first stack comprising, as the functional layer, a layer of indium tin oxide which comprises a proportion by weight from 85 to 95% indium oxide and from 15 to 5% tin oxide.

13. Use of glazing as described in any of claims 1 to 12, the glazing comprising two, three or four transparent substrates, including a substrate coated, on each face, with a stack of thin layers, including:
- on a first face, facing the outside of said glazing, a first stack which reflects the heat substantially owing to one or more functional layers based on a mixed indium tin oxide, said first stack comprising, as the functional layer, a layer of indium tin oxide which comprises a proportion by weight from 85 to 95% indium oxide and from 15 to 5% tin oxide.
- on the other face, facing the inside of the glazing, a second stack which reflects the heat substantially owing to one or more functional layers based on a metal selected from gold or silver,
said glazing comprising at least one additional heat-reflecting coating which is deposited on at least one other substrate constituting the glazing and on the third face and/or on the fifth face of the glazing when viewed from the inside to the outside of said heating device,
as a constituent element of the wall or of a door of a heating device provided with an enclosure and/or a cavity such as an oven.
